(19) Europäisches Patentamt / European Patent Office / Office européen des brevets

(11) **EP 2 427 991 B1**

(12) **FASCICULE DE BREVET EUROPEEN**

(45) Date de publication et mention de la délivrance du brevet:
**18.04.2018 Bulletin 2018/16**

(21) Numéro de dépôt: **10727072.0**

(22) Date de dépôt: **30.04.2010**

(51) Int Cl.:
*H04L 5/14* (2006.01)    *H04L 25/02* (2006.01)
*H04L 25/03* (2006.01)

(86) Numéro de dépôt international:
**PCT/FR2010/050825**

(87) Numéro de publication internationale:
**WO 2010/128234 (11.11.2010 Gazette 2010/45)**

(54) **PROCEDE DE PRE-EGALISATION PAR RETOURNEMENT TEMPOREL EN FDD**

FDD-ZEITUMKEHR VERWENDENDES VORENTZERRUNGSVERFAHREN

PRE-EQUALIZING METHOD USING FDD TIME REVERSAL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **07.05.2009 FR 0953062**

(43) Date de publication de la demande:
**14.03.2012 Bulletin 2012/11**

(73) Titulaire: **Orange**
**75015 Paris (FR)**

(72) Inventeurs:
• **PHAN HUY, Dinh Thuy**
**F-75004 Paris (FR)**
• **CHAUFRAY, Jean-Marie**
**F-92290 Chatenay Malabry (FR)**

(56) Documents cités:
EP-A1- 0 936 781       US-A1- 2005 141 459
US-A1- 2007 099 571    US-A1- 2007 206 504

• DAHL T ET AL: "Blind beamforming in frequency division duplex MISO systems based on time reversal mirrors", SIGNAL PROCESSING ADVANCES IN WIRELESS COMMUNICATIONS, 2005 IEEE 6TH W ORKSHOP ON NEW YORK, NY, USA JUNE 2-8, 2005, PISCATAWAY, NJ, USA,IEEE, 2 June 2005 (2005-06-02), pages 640-644, XP010834538, DOI: 10.1109/SPAWC.2005.1506218 ISBN: 978-0-7803-8867-3

**Description**

La présente invention concerne un procédé de pré-égalisation d'un signal de données, par exemple transmis dans un réseau de communication radio basé sur un duplexage en fréquence FDD (pour "frequency division duplex" en anglais).

Dans un réseau de type FDD, deux entités communicantes transmettent des signaux de données dans des bandes de fréquence distinctes. Les entités communicantes sont par exemple des terminaux radio, des stations de base terrestres ou satellitaires, ou bien encore des points d'accès radio. L'invention concerne les réseaux de communication radio de type SISO (pour "Single Input, Single Output" en anglais), pour lesquels les entités communicantes ont une antenne unique, les réseaux de type MIMO (pour "Multiple Input, Multiple Output" en anglais) pour lesquels les entités communicantes ont une pluralité d'antennes, et les réseaux combinant des entités communicantes comportant une antenne et des entités communicantes avec une pluralité d'antennes de type SIMO (pour "Single Input, Multiple Output" en anglais) ou MISO (pour "Multiple Input, Single Output").

Un signal radio transmis par une antenne d'une entité communicante, dit signal d'antenne, subit des déformations en fonction des conditions de propagation entre un point d'origine défini en sortie de l'antenne d'origine et un point destinataire défini en entrée d'une antenne de l'entité communicante destinataire. Afin de limiter ces déformations, le signal d'antenne est préalablement distordu par application de coefficients de pré-égalisation en fonction des caractéristiques du canal de propagation entre ces deux antennes. Il est donc nécessaire de caractériser ce canal de propagation.

Parmi les méthodes de pré-égalisation existantes, se distinguent les méthodes basées sur le retournement temporel du fait de leur complexité réduite et de leur performance.

Le retournement temporel est une technique de focalisation des ondes, typiquement des ondes acoustiques, qui repose sur l'invariance par renversement du temps de l'équation d'onde. Ainsi, une onde temporellement inversée se propage comme une onde directe qui remonterait le temps.

Une impulsion brève émise d'un point origine se propage dans un milieu de propagation. Une partie de cette onde reçue par un point destinataire est retournée temporellement avant d'être renvoyée dans le milieu de propagation. L'onde converge vers le point origine en y reformant une impulsion brève. Le signal recueilli au point origine est quasi identique dans sa forme au signal d'origine émis au point origine. En particulier l'onde retournée converge d'autant plus précisément que le milieu de propagation est complexe. Le retournement temporel du canal de propagation appliqué à l'onde permet de concentrer l'énergie et d'annuler l'effet de ce canal en un point focal lors de la transmission de l'onde ainsi pré-distordue à partir du point d'origine.

La technique du retournement temporel est ainsi appliquée aux réseaux de communication radio pour annuler l'effet du canal de propagation sur le signal d'antenne en un point focal, notamment en réduisant l'étalement du canal par concentration de l'énergie au point focal, et simplifier le traitement de symboles reçus après la traversée du canal. Le signal d'antenne émis par une antenne de l'entité communicante d'origine est ainsi pré-égalisé par application de coefficients obtenus à partir du retournement temporel de la réponse impulsionnelle du canal de propagation que ce signal d'antenne doit traverser. La mise en oeuvre du retournement temporel nécessite donc la connaissance du canal de propagation par l'entité communicante d'origine dans la bande de fréquence dédiée aux communications issues de cette entité.

Or, dans le cas d'une transmission en mode FDD, les transmissions d'une entité communicante, dite entité communicante d'origine, vers une entité communicante destinataire et les transmissions dans le sens contraire sont effectuées dans des bandes de fréquences distinctes. Il s'agit par exemple pour un système de radiocommunication, d'une transmission dans une première bande de fréquence d'un terminal radio mobile vers une station de base, dite transmission en sens montant, et d'une transmission dans une deuxième bande de fréquence d'une station de base vers un terminal radio mobile, dite transmission en sens descendant. Si une entité communicante peut estimer un canal de propagation à partir de la réception d'un signal le traversant, elle ne peut pas estimer un canal de propagation à partir d'un signal transmis dans une bande de fréquence différente. Il est donc particulièrement intéressant d'avoir une technique de pré-égalisation des signaux d'antennes pour ce type de transmission.

Une première solution est proposée dans l'article intitulé "From Theory to practice: an overview of MIMO spacetime coded wireless systems" dont les auteurs sont David Gesbert, Mansoor Shafi, Da-Shan Shiu, Peter J Smith, et Aymon Naguib, et publié dans la revue IEEE Journal on Selected Areas in Communication, vol 21, N°3, en avril 2003. La méthode proposée utilise le retournement temporel comme technique de pré-égalisation dont les coefficients sont évalués à partir de l'estimation du canal de propagation effectuée par l'entité communicante destinataire. Cette estimation est réalisée par l'entité communicante destinataire à partir de la connaissance de pilotes préalablement émis par l'entité communicante d'origine. Une quantification de l'estimation du canal de propagation est alors délivrée à l'entité communicante origine. Cependant, la quantification de l'estimation du canal de propagation doit être suffisamment précise afin de garantir une pré-égalisation efficace. Par ailleurs, le besoin de ressources radio nécessaires pour délivrer l'estimation quantifiée du canal de propagation augmente avec la précision de la quantification.

Un compromis doit donc être atteint entre précision de la quantification de l'estimation du canal de propagation et la consommation de ressources radio utilisées pour l'émission de l'estimation quantifiée du canal de propagation.

US 2007/099571 A1, EP 0 936 781 A1, US 2007/206504 A1 et DAHL T ET AL: "Blind beamforming in frequency division duplex MISO systems based on time reversal mirrors", IEEE WORKSHOP ON SIGNAL PROCESSING ADVANCES IN WIRELESS COMMUNICATIONS, PISCATAWAY, NJ, USA, IEEE, 2 juin 2005, pages 640-644, DOI: 10.1109/SPAWC.2005.1506218, ISBN: 978-0-7803-8867-3 proposent des méthodes de pré-égalisation alternatives. L'invention propose une solution alternative offrant une méthode de pré-égalisation basée sur le retournement temporel sans nécessiter la délivrance par l'entité communicante destinataire d'une estimation quantifiée d'un canal de propagation. Cette solution est en outre adaptée pour des entités communicantes avec une seule antenne pour laquelle le signal de données est composé d'un seul signal d'antenne, ou pour des entités communicantes avec plusieurs antennes pour lesquelles un signal de données est composé d'une pluralité de signaux d'antenne.

Pour atteindre cet objectif, l'invention propose un procédé de pré-égalisation d'un signal de données transmis en duplexage en fréquence par une entité communicante d'origine comportant un ensemble d'antennes d'origine à destination d'une entité communicante destinataire comportant un ensemble d'antennes destinataires conformément à la revendication 1. Ce procédé permet ainsi de s'affranchir de l'utilisation de ressource radio pour l'émission d'une estimation d'un canal de propagation. De plus, aucune quantification n'est nécessaire, ce qui permet de garantir une pré-égalisation efficace. L'entité communicante destinataire libère les ressources destinées auparavant à délivrer la ou les estimation(s) du canal de propagation sans adjonction de traitements analogiques ou numériques complexes.

La complexité du procédé selon l'invention dans l'entité communicante d'origine pour la pré-égalisation d'un signal de données est ainsi limitée à l'émission et la réception de signaux pilotes et d'estimation de canaux de propagation. En outre, la complexité du procédé dans l'entité communicante destinataire pour la pré-égalisation d'un signal de données émis par l'entité communicante d'origine est limitée à la génération de séquences pilotes et à l'estimation d'une réponse impulsionnelle.

Les coefficients de pré-égalisation sont déterminés pour concentrer l'énergie du signal sur le point focal par application du retournement temporel et réduire ainsi l'étalement du canal de propagation que le signal va traverser. Ils sont directement obtenus à partir d'une combinaison d'un ensemble de réponses impulsionnelles composites.

De plus, le procédé est indépendant des différentes méthodes de pré-codage et de modulation appliquées à des données binaires générant un signal de données comportant une pluralité de signaux d'antenne.

En outre, l'invention concerne indifféremment les réseaux de communication radio de type SISO pour lesquels les entités communicantes ont une antenne unique, les réseaux de type MIMO pour lesquels les entités communicantes ont une pluralité d'antennes, et les réseaux combinant des entités communicantes comportant une antenne et des entités communicantes avec une pluralité d'antennes de type SIMO ou MISO.

Le procédé comporte en outre, dans l'étape de réception de la première séquence pilote émise par l'antenne destinataire, une sélection de l'antenne de référence en fonction d'un ensemble de signaux pilotes reçus par l'ensemble d'antennes d'origine.

Cette sélection permet ainsi de sélectionner le premier canal de propagation en fonction de caractéristiques des signaux pilotes reçus, par exemple leur étalement dans le temps du signal.

Dans un mode particulier de réalisation la sélection de l'antenne de référence est réalisée en fonction de l'énergie des signaux pilotes de l'ensemble des signaux pilotes reçus par l'ensemble des antennes d'origine.

Cette sélection permet ainsi de privilégier le premier canal de propagation dans lequel l'énergie du signal est la moins atténuée.

L'invention concerne également un dispositif pour la pré-égalisation d'un signal de données transmis en duplexage en fréquence pour une entité communicante d'origine comportant un ensemble d'antennes d'origine, l'entité communicante d'origine étant apte à transmettre le signal à destination d'une entité communicante destinataire comportant un ensemble d'antennes destinataires conformément à la revendication 4. L'invention concerne également un dispositif pour la pré-égalisation d'un signal de données transmis en duplexage en fréquence pour une entité communicante destinataire comportant un ensemble d'antennes destinataires, l'entité communicante destinataire étant apte à recevoir le signal de données transmis par une entité communicante origine comportant un dispositif décrit précédemment, l'entité communicante d'origine comportant un ensemble d'antennes d'origine conformément à la revendication 5. L'invention concerne également une entité communicante d'un système de communication radio comportant au moins un des dispositifs pour la pré-égalisation d'un signal de données précités.

L'invention concerne également un système de communication radio comprenant au moins une entité communicante d'origine et au moins une entité communicante destinataire selon l'invention.

L'invention concerne également un programme d'ordinateur pour une entité communicante d'origine comprenant les instructions logicielles pour commander la mise en oeuvre par l'entité de celles des étapes du procédé selon l'invention qui sont mises en oeuvre par l'entité communicante d'origine lorsque le programme est exécuté par l'entité communicante d'origine.

L'invention concerne également un programme d'ordinateur pour une entité communicant destinataire comprenant les instructions logicielles pour commander la mise en oeuvre par ladite entité de celles des étapes du procédé selon l'invention qui sont mises en oeuvre par l'entité communicante destinataire lorsque le programme est exécuté par l'entité communicante destinataire.

Les dispositifs, entités communicantes, système et programmes d'ordinateur présentent des avantages analogues à ceux précédemment décrits.

D'autres caractéristiques et avantages de la présente invention apparaîtront plus clairement à la lecture de la description suivante de plusieurs modes particuliers de réalisation du procédé pour la pré-égalisation d'un signal de données et des entités communicantes associées, donnés à titre de simples exemples illustratifs et non limitatifs, et des dessins annexés, sur lesquels :

- la figure 1 est un bloc-diagramme schématique d'une entité communicante d'origine communicant avec une entité communicante destinataire selon l'invention,
- la figure 2 représente les étapes du procédé de pré-égalisation d'un signal de données selon un premier mode particulier de réalisation, et
- la figure 3 représente les étapes du procédé de pré-égalisation d'un signal de données selon un deuxième mode particulier de réalisation.

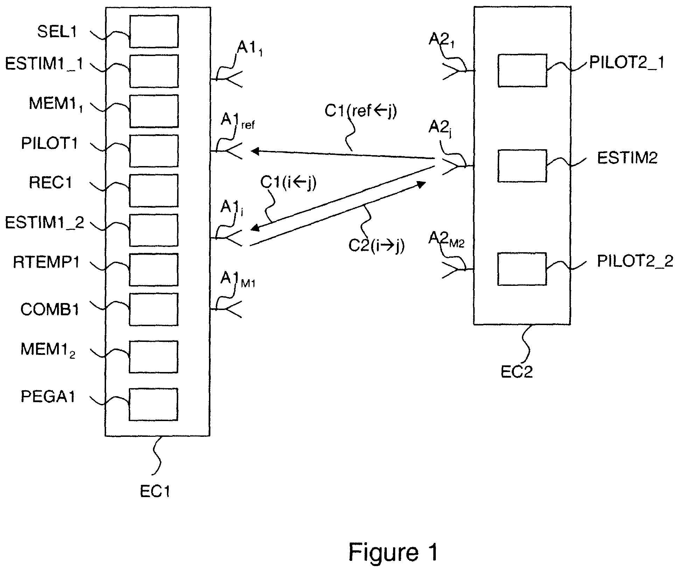

En référence à la **figure 1,** une entité communicante d'origine EC1 est apte à communiquer avec une entité destinataire EC2 au travers d'un réseau de communication radio basé sur un duplexage en fréquence FDD non représenté sur la figure. Par exemple, le réseau de communication radio est un réseau de radiocommunication cellulaire de type UMTS (pour "Universal Mobile Communication System" en anglais) défini par l'organisme de spécification 3GPP (pour "3rd Generation Partnership Project" en anglais), et ses évolutions dont le 3GPP-LTE (pour "Long Term Evolution" en anglais).

Les entités communicantes peuvent être des terminaux mobiles ou bien encore des stations de base terrestres ou satellitaires, ou bien encore des points d'accès. Selon le mode FDD, les transmissions d'une station de base vers un terminal radio mobile, dites en voie montante, sont effectuées dans une bande de fréquence distincte de la bande de fréquence dédiée aux transmissions d'un terminal radio mobile vers une station de base, dites en voie descendante. Par souci de clarté, l'invention est présentée pour la transmission unidirectionnelle d'un signal de données de l'entité communicante EC1 à destination de l'entité communicante EC2, que ce soit dans le sens montant ou dans le sens descendant. L'invention concerne également les transmissions bidirectionnelles.

L'entité communicante d'origine EC1 comporte M1 antennes d'origine ($A1_I$, ...$A1_{ref}$,..$A1_i$,...$A1_{M1}$), avec M1 supérieur ou égal à 1. L'entité communicante destinataire comporte M2 antennes destinataires ($A2_1$, ...$A2_j$, ...$A2_{M2}$) avec M2 supérieur ou égal à 1.

L'entité communicante destinataire EC2 est apte à émettre une séquence pilote ou un signal radio à partir d'au moins une quelconque des antennes $A2_j$, j compris entre 1 et M2, dans une première bande de fréquence. Un premier canal de propagation $C1(i \leftarrow j)$ est défini entre l'antenne $A2_j$ de l'entité communicante destinataire EC2 et une antenne $A1_i$ de l'entité communicante d'origine EC1. De même, un premier canal de propagation $C1(ref \leftarrow j)$ est défini entre l'antenne destinataire $A2_j$ et l'antenne d'origine $A1_{ref}$. M1xM2 premiers canaux de propagation $C1(i \leftarrow j)$, pour i variant de 1 à M1 et j variant de 1 à M2, sont ainsi définis entre les entités communicantes EC1 et EC2.

L'entité communicante d'origine EC1 est apte à émettre une séquence pilote ou un signal radio à partir d'au moins une quelconque des antennes $A1_i$, i compris entre 1 et M1, à destination de l'entité communicante destinataire EC2 dans une deuxième bande de fréquence distincte de la première. Un deuxième canal de propagation $C2(i \rightarrow j)$ est défini entre l'antenne $A1_i$ de l'entité communicante d'origine EC1 et une antenne $A2_j$ de l'entité communicante destinataire EC2 pour une transmission de l'entité communicante EC1 vers l'entité communicante EC2. M1xM2 deuxièmes canaux de propagation $C2(i \rightarrow j)$, pour i variant de 1 à M1 et j variant de 1 à M2, sont ainsi définis entre les entités communicantes EC1 et EC2.

Dans la figure 1, sont seulement représentés des moyens inclus dans l'entité communicante d'origine et des moyens inclus dans l'entité d'origine destinataire en relation avec l'invention.

Les entités communicantes d'origine et destinataires comportent en outre une unité centrale de commande, non représentée, à laquelle les moyens inclus sont reliés, destinée à contrôler le fonctionnement de ces moyens.

L'entité communicante d'origine comporte en outre un générateur de signal de données comportant M1 signaux d'antenne. De tels signaux d'antenne sont définis à partir de données binaires par des méthodes de modulation, codage et répartition sur les M1 antennes par exemple selon l'article "Space block Coding: A simple transmitter diversity technique for wireless communications", publié dans la revue IEEE Journal areas communications, vol16 pp1456-1458, en octobre, 998 dont l'auteur est S. Alamouti.

L'entité communicante d'origine EC1 comporte:

- un récepteur sélectif SEL1 agencé pour recevoir sur l'ensemble des antennes d'origine une première séquence pilote émise par l'entité communicante destinataire EC2 et pour sélectionner une antenne de référence de l'ensemble des antennes d'origine,

- un estimateur de canal ESTIM1_1 agencé pour estimer une première réponse impulsionnelle à partir de la première séquence pilote émise par l'entité destinataire et reçue par l'antenne de référence,
- une mémoire MEM1$_1$ mémorisant la première réponse impulsionnelle, ou la fonction de transfert correspondante, déterminée par l'estimateur de canal ESTIM1_1,
- un générateur de séquence pilot PILOT1 agencé pour émettre une deuxième séquence pilote à partir d'une quelconque antenne A1$_i$, i compris entre 1 et M1, sur une fréquence porteuse f1 de la bande de fréquence dédiée aux transmissions de l'entité communicante EC1 à destination de l'entité communicante EC2,
- un récepteur REC1 agencé pour recevoir via l'antenne de référence sélectionnée une troisième séquence pilote modulée émise par l'entité destinataire,
- un estimateur de canal ESTIM1_2 agencé pour estimer une réponse impulsionnelle combinée à partir de la troisième séquence pilote modulée émise par l'entité destinataire et reçue par l'antenne de référence,
- un analyseur d'impulsion RTEMP1 agencé pour effectuer le retournement temporel de la réponse impulsionnelle combinée délivrée par l'estimateur de canal ESTIM1_2,
- un calculateur COMB1 agencé pour combiner une première réponse impulsionnelle mémorisée dans la mémoire MEM1$_1$ et une réponse impulsionnelle combinée retournée temporellement délivrée par l'analyseur d'impulsion RTEMP1,
- une mémoire MET1$_2$ mémorisant des réponses impulsionnelles, ou des fonctions de transfert correspondantes, déterminées itérativement par le calculateur COMB1,
- un pré-égaliseur PEGA1 agencé pour déterminer des coefficients de pré-égalisation à partir d'une combinaison des fonctions de transfert ou réponses impulsionnelles mémorisées dans la mémoire MEM1$_2$.

Bien entendu, les mémoires MEM1$_1$ et MEM1$_2$ peuvent être mises en oeuvre par un unique module de mémorisation, et le récepteur sélectif SEL1 et le récepteur REC 1 peuvent être mis en oeuvre par un unique module de réception de signaux radio. De même, les estimateurs ESTIM1_1 et ESTIM1_2 peuvent être mis en oeuvre par un unique module d'estimation.

L'entité communicante destinataire EC2 comporte:

- un générateur de séquence pilote PILOT2_1 agencé pour émettre une première séquence pilote à partir d'une quelconque antenne destinataire A2$_j$, j compris entre 1 et M2, sur une fréquence porteuse f2 de la bande de fréquence dédiée aux transmissions de l'entité communicante EC2 à destination de l'entité communicante EC1,
- un estimateur de canal ESTIM2 agencé pour estimer une réponse impulsionnelle à partir de la réception via une antenne destinataire de l'ensemble des antennes destinataires d'une deuxième séquence pilote émise par une antenne d'émission de l'entité communicante d'origine,
- un générateur de séquence pilote PILOT2_2 agencé pour émettre à partir d'une antenne destinataire une troisième séquence pilote modulée par la réponse impulsionnelle estimée par l'estimateur de canal ESTIM2. La séquence pilote modulée est émise sur une fréquence porteuse de la bande de fréquence dédiée aux transmissions de l'entité communicante EC2 à destination de l'entité communicante EC1.

Bien entendu, les générateurs de séquence pilotes PILOT2_1 et PILOT2_2 peuvent être mis en oeuvre par un unique module de génération de séquence pilote.

Les différents moyens des entités communicantes d'origine et destinataires peuvent être mis en oeuvre par des techniques analogiques ou numériques bien connues de l'homme du métier.

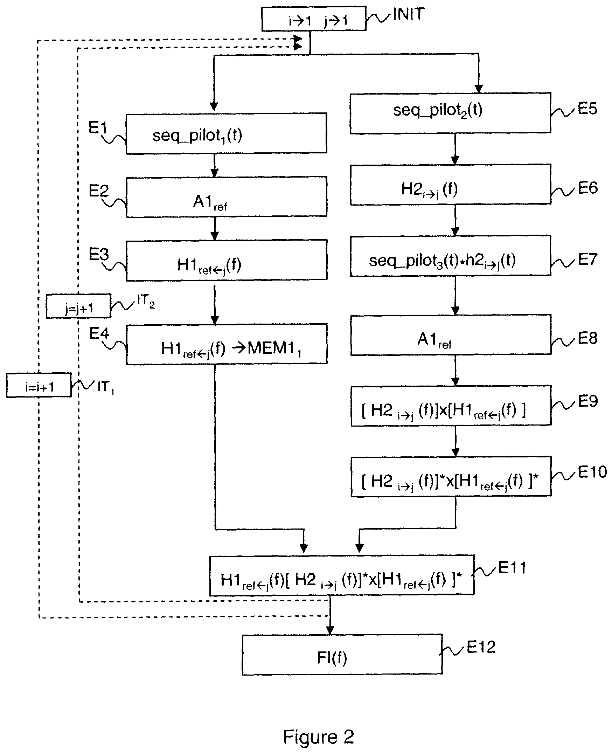

En référence à la **figure 2,** le procédé de pré-égalisation d'un signal de données selon l'invention comprend des étapes E1 à E12. Les résultats des étapes sont dans cet exemple décrits dans le domaine fréquentiel mais transposables directement dans le domaine temporel compte tenu des définitions suivantes.

Une réponse impulsionnelle est définie par une fonction ri(t), fonction du temps t, dont la fonction de transfert est donnée par RI(f), fonction du temps f. Le produit de convolution de réponses impulsionnelles correspond au produit des fonctions de transfert correspondantes. Une réponse impulsionnelle ri(t) retournée dans le temps est notée ri(-t), et la fonction de transfert correspondante est RI(f)*, conjuguée de la fonction de transfert RI(f).

Les étapes E1 à E11 sont réitérées pour au moins une partie de l'ensemble des antennes destinataires et au moins une partie des antennes d'origine. Les itérations sont symbolisées par une étape d'initialisation INIT et une étape IT$_1$ d'incrémentation de l'indice i des antennes d'origine A1$_i$ et une étape IT$_2$ d'itération de l'indice j des antennes destinataires A2$_j$. Une itération des étapes E1 à E11 est ainsi décrite pour une antenne d'origine A1$_i$, et pour une antenne destinataire A2$_j$.

A l'étape E1, le générateur de séquence pilote PILOT2_1 de l'entité communicante destinataire génère une première séquence pilote seq_pilot$_1$(t). Cette première séquence pilote est émise par l'antenne A2$_j$ sur une fréquence porteuse f2 de la bande de fréquence dédiée aux transmissions de l'entité communicante EC2 à destination de l'entité communicante EC1 conformément aux principes de base de transmission sur fréquence porteuse en mode FDD.

A l'étape suivante E2, le récepteur sélectif SEL1 de l'entité communicante d'origine reçoit, sur l'ensemble des antennes d'origine, la première séquence pilote émise par l'entité communicante EC2. Le récepteur sélectif SEL1 sélectionne de plus une antenne de référence à partir de l'ensemble des signaux pilotes reçus sur l'ensemble des antennes d'origine. Il effectue cette sélection par exemple en comparant les énergies reçues sur les différentes antennes d'origine et sélectionne l'antenne sur laquelle le signal pilote est d'énergie maximum. Dans un deuxième exemple, le récepteur sélectif sélectionne l'antenne sur laquelle le signal pilote est le moins étalé dans le temps. Dans un autre exemple, le récepteur sélectif peut également choisir une antenne de référence aléatoirement.

A l'étape E3, l'estimateur de canal ESTIM1_1, à partir du signal pilote reçu sur l'antenne de référence, estime une première réponse impulsionnelle $h1_{ref \leftarrow j}$ (t), ou de façon équivalente une première fonction de transfert $H1_{ref \leftarrow j}$(f), représentative du premier canal de propagation C1(ref←j) entre l'antenne destinataire $A2_j$ et l'antenne de référence $A1_{ref}$. L'estimation de canal est réalisée à partir de la connaissance de la première séquence pilote émise par l'antenne destinataire $A2_j$ par toute méthode d'estimation de canal bien connue de l'homme du métier par exemple selon l'une des méthodes décrites dans l'ouvrage intitulé "Digital Communications" dont les auteurs sont John G. Proakis et Masoud Saheli, publié en novembre 2007, édition Mc Graw-Hill.

A l'étape suivante E4 la mémoire $MEM1_1$ mémorise la première réponse impulsionnelle $h1_{ref \leftarrow j}$ (t), ou de façon équivalente la première fonction de transfert $H1_{re \leftarrow j}$(f), estimée lors de l'étape E3.

Parallèlement à l'étape E1, le générateur de séquence pilote PILOT1 de l'entité communicante d'origine génère une deuxième séquence pilote $seq\_pilot_2$(t) lors d'une étape E5. Cette deuxième séquence pilote est émise par l'antenne d'origine $A1_i$ sur une fréquence porteuse f1 dans la bande de fréquence dédiée aux transmissions de l'entité communicante EC1 à destination de l'entité communicante EC2 conformément aux principes de base de transmission sur fréquence porteuse en mode FDD.

A l'étape E6, suivante de l'étape E5, l'estimateur de canal ESTIM2, à partir de la deuxième séquence pilote émise par l'antenne d'origine $A1_i$ et reçue par l'antenne destinataire $A2_j$, estime une deuxième réponse impulsionnelle $h2_{i \rightarrow j}$(t), ou de façon équivalente une deuxième fonction de transfert $H2_{i \rightarrow j}$(f). Cette deuxième fonction de transfert est représentative du deuxième canal de propagation C2(i→j) entre l'antenne d'origine $A1_i$ et l'antenne destinataire $A2_j$. L'estimation est réalisée à partir de la connaissance de la deuxième séquence pilote émise par l'antenne d'origine $A1_i$ par toute méthode d'estimation de canal bien connue de l'homme du métier tel que par exemple citée précédemment.

A l'étape suivante E7, le générateur de séquence pilote PILOT2_2 de l'entité destinataire génère une troisième séquence pilote $seq\_pilot_3$(t). Cette troisième séquence pilote est émise par l'antenne $A2_j$ après pré-distorsion par la deuxième réponse impulsionnelle $h2_{i \rightarrow j}$(t) déterminée lors de l'étape E7. La troisième séquence pilote modulée s'écrit ainsi:

$$seq\_pilot_3(t) * h2_{i \rightarrow j}(t).$$

Cette troisième séquence modulée est émise par l'antenne destinataire $A2_j$ sur une fréquence porteuse f2 de la bande de fréquence dédiée aux transmissions de l'entité communicante EC2 à destination de l'entité communicante EC1 conformément aux principes de base de transmission sur fréquence porteuse en mode FDD.

A l'étape E8, le récepteur REC1 de l'entité communicante d'origine EC1 reçoit, sur l'ensemble des antennes d'origine, la troisième séquence pilote modulée émise par l'antenne destinataire $A2_j$. Le récepteur REC1 sélectionne le signal pilote reçu par l'antenne de référence $A1_{ref}$.

A l'étape E9, l'estimateur de canal ESTIM1_2 de l'entité communicante d'origine, à partir du signal pilote reçu par l'antenne de référence, estime une réponse impulsionnnelle $ri_{comb}$(t), dite réponse impulsionnelle combinée, ou de façon équivalente une fonction de transfert $RI_{comb}$(f). L'estimation est réalisée à partir de la connaissance de la troisième séquence pilote par toute méthode d'estimation de canal bien connue de l'homme du métier par exemple tel que cité précédemment. La fonction de transfert $RI_{comb}$(f) est représentative de la succession des deuxième et premier canaux de propagation et est donnée par:

$$RI_{comb}(f) = H2_{i \rightarrow j} (f) \text{ x } H1_{ref \leftarrow j} (f) \quad ,$$

avec $H1_{ref \leftarrow j}$ (f) fonction de transfert du premier canal de propagation C1($A1_{ref}$←$A2_j$) et $H2_{i \rightarrow j}$ (f) fonction de transfert du deuxième canal de propagation C2($A1_i$ →$A2_j$).

A l'étape E10, l'analyseur d'impulsion RTEMP1 effectue le retournement temporel de la réponse impulsionnelle combinée $ri_{comb}$(t). A cette fin, l'analyseur d'impulsion enregistre la réponse impulsionnelle combinée, mémorise par exemple les coefficients de la réponse impulsionnelle combinée et classe les conjugués de ces derniers dans un ordre inverse de celui des coefficients de $ri_{comb}(t)$. La fonction de transfert de la réponse impulsionnelle combinée retournée temporellement $ri_{comb}(-t)$ est ainsi donnée par

$$Ri_{comb}(f)^* = [H2_{i \to j}(f)]^* \times [H1_{ref \leftarrow j}(f)]^*.$$

Dans un autre exemple, l'analyseur d'impulsion analyse la réponse impulsionnelle $ri_{comb}(t)$ par un séparateur analogique et en déduit un modèle discret de la réponse impulsionnelle combinée. L'analyseur effectue alors le retournement temporel à partir du modèle discret.

A l'étape suivante E11, le calculateur COMB1 effectue une combinaison de la réponse impulsionnelle $ri_{comb}(-t)$ et de la première réponse impulsionnelle mémorisée $h1_{ref \leftarrow j}(t)$ lors de l'étape E4 dans la mémoire $MEM1_1$ de l'entité communicante d'origine. La combinaison est mise en oeuvre par le produit de convolution des réponses impulsionnelles précitées, ou de façon équivalente par le produit des fonctions de transfert correspondantes. La fonction de transfert $H_{ij}$ (f) de la réponse impulsionnelle $r_{ij}(t)$ résultant est donnée par :

$$H_{ij}(f) = H1_{ref \leftarrow j}(f) \times [H2_{i \to j}(f)]^* \times [H1_{ref \leftarrow j}(f)]^*$$

La réponse impulsionnelle $r_{ij}(t)$, dite réponse impulsionnelle composite, est alors mémorisée dans la mémoire $MEM1_2$ de l'entité communicante d'origine.

La succession des étapes E1 à E4 et la succession des étapes E5 à E10 peuvent être effectuées parallèlement. Le procédé ne nécessite ainsi qu'une simple coopération entre les entités communicantes. Cependant l'étape E11 n'est activée qu'après déroulement des étapes E2 à E4 succédant à l'émission d'une impulsion par l'entité communicante EC2 et déroulement des étapes E5 à E10 succédant à l'émission d'une première séquence pilote par l'entité communicante destinataire EC2. Une synchronisation des entités communicantes permet alors d'optimiser l'activation de l'étape E11 en effectuant par exemple les étapes E1 et E5 simultanément.

Les étapes E1 à E11 étant réitérées pour une partie des antennes d'origine et une partie des antennes destinataires, la mémoire $MEM1_2$ de l'entité communicante d'origine comporte un ensemble de fonctions de transfert composites ou de réponses impulsionnelles composites mémorisées. Pour des itérations effectuées sur M1 antennes destinataires et M2 antennes d'origine, la mémoire $MEM1_2$ comporte M1xM2 fonctions de transfert composites $H_{ij}(f)$, pour i variant de 1 à M1 et j variant de 1à M2.

A l'étape E12, le pré-égaliseur PEGA1 de l'entité communicante d'origine détermine des coefficients de pré-égalisation d'un signal de données S(t) comportant M1 signaux d'antenne $[S_1(t), .., S_i(t), .., S_{M1}(t)]$, à partir d'une combinaison des fonctions de transfert composites $H_{ij}(f)$ pour former un ensemble FI de M1 filtres de pré-égalisation $FI_i(f)$, i variant de 1 à M1. Le signal d'antenne $S_i(t)$, émis via l'antenne $A1_i$ est ainsi mis en forme par application du filtre correspondant $FI_i(f)$ donné par :

$$FI_i(f) = \sum_{j=1}^{M2} C_j H_{ij}(f).$$

Les coefficients de pondération $C_j$, j compris entre 1 et M2, sont des paramètres configurables. Ils sont déterminés en fonction de la méthode de génération d'un signal de données utilisée. Ces paramètres sont de plus mis à jour par exemple lors de l'extinction ou l'activation d'une antenne destinataire ou en fonction de l'évolution de l'état des canaux de propagation au cours du temps.

Ultérieurement à l'étape E12, le signal de données est ainsi pré-égalisé par filtrage de chacun des signaux d'antenne par le filtre correspondant de l'ensemble FI et émis par l'entité communicante EC1 à destination de l'entité communicante EC2.

Dans un mode particulier de réalisation, les étapes E1 à E11 ne sont effectuées que pour une unique antenne d'origine $A1_i$ de l'ensemble des antennes d'origine. Ce mode de réalisation correspond au cas où le signal de données à égaliser est le signal d'antenne $S_i(t)$. La mémoire $MEM1_2$ de l'entité communicante d'origine comporte M2 fonctions de transfert composites $H_{ij}(f)$ pour j variant de 1 à M2. Le pré-égaliseur PEGA1 détermine un unique filtre de pré-égalisation $FI_i(f)$. Le signal d'antenne Si(t), émis via l'antenne $A1_i$ est ainsi mis en forme par application du filtre correspondant $FI_i(f)$ donné par :

$$FI_i(f) = \sum_{j=1}^{M2} C_j H_{ij}(f).$$

Dans un mode particulier de réalisation, l'ensemble d'antennes destinataires ne comporte qu'une seule antenne destinataire $A2_1$. Les étapes E1 à E11 ne sont mises en oeuvre que pour l'émission d'une unique première séquence pilote via l'antenne $A2_1$ de l'entité communicante destinataire.

A titre d'exemple illustratif dans lequel les étapes E1 à E11 sont réitérées pour toutes les antennes d'origine, le pré-égaliseur à l'étape E12 détermine des coefficients de pré-égalisation en fonction de M1 fonctions de transfert composites $H_{i1}(f)$, i variant de 1 à M1. L'ensemble FI de M1 filtres de pré-égalisation $FI_i(f)$ à appliquer au signal de données est donné par:

$$FI = [FI_1, \ldots, FI_i(f), \ldots FI_{M1}(f)]$$

avec

$$FI_i(f) = H_{i1}(f).$$

Dans un mode particulier de réalisation, l'ensemble d'antennes d'origine ne comporte qu'une seule antenne d'origine $A1_1$. Le signal de données ne comporte plus alors qu'un seul signal d'antenne $S_1(t)$ émis par l'unique antenne d'origine et l'antenne de référence est l'antenne d'origine $A1_1$. Les étapes E1 à E11 ne sont mises en oeuvre que pour l'émission d'une unique deuxième séquence pilote et une unique troisième séquence pilote modulée via l'unique antenne $A1_1$ de l'entité communicante d'origine.

A titre d'exemple illustratif dans lequel les étapes E1 à E11 sont réitérées pour toutes les antennes destinataires, à l'étape E12, M2 fonctions de transfert composites $H_{1j}$, j variant de 1 à M2, sont disponibles. Le pré-égaliseur détermine un unique filtre de pré-égalisation $FI_1(f)$ appliqué au signal de données partir de M2 coefficients $C_j$ tel que:

$$FI_1(f) = \sum_{j=1}^{M2} C_j H_{1j}(f).$$

Dans un mode particulier de réalisation, l'ensemble d'antennes d'origine ne comporte qu'une seule antenne d'origine $A1_1$ et l'ensemble d'antennes destinataires ne comporte qu'une seule antenne destinataire $A2_1$. Le signal de donnée ne comporte qu'un seul signal d'antenne $S_1(t)$ et l'antenne de référence de l'entité d'origine est l'antenne $A1_1$. Les étapes E1 à E11 ne sont mises en oeuvre que pour l'émission d'une unique première séquence pilote via l'antenne destinataire $A2_1$ et l'émission d'une unique deuxième séquence pilote et une unique troisième séquence pilote modulée via l'antenne d'origine $A1_1$. A l'étape E12, la fonction de transfert composite $H_{11}(f)$ détermine un unique filtre de pré-égalisation $FI_1(f)$ donné par

$$FI_1(f) = H_{11}(f).$$

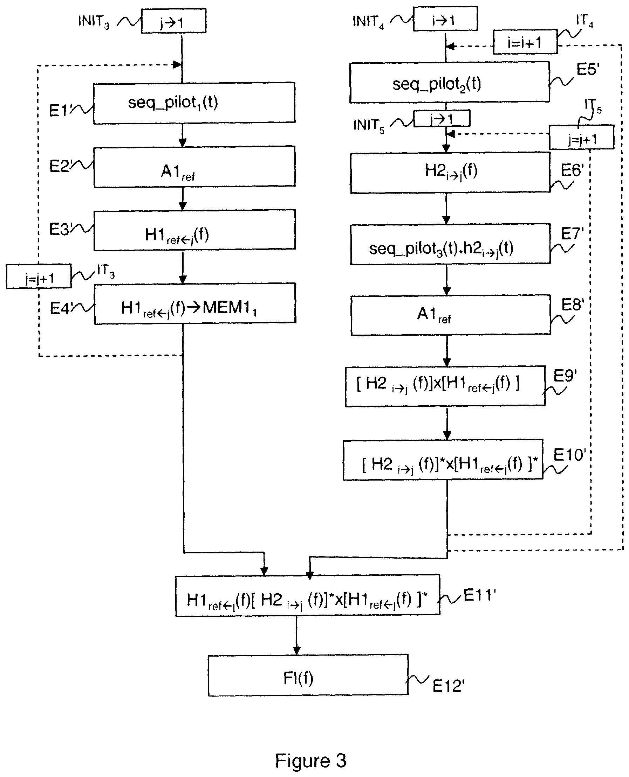

**La figure 3** représente les étapes du procédé de pré-égalisation d'un signal de données selon un deuxième mode particulier de réalisation. Le procédé comporte des étapes E1' à E12' similaires aux étapes E1 à E12 précédemment décrites pour lesquelles les boucles d'itération sur les antennes d'origine et antennes destinataires sont modifiées.

Les étapes E1' à E4' sont réitérées pour au moins une partie de l'ensemble des antennes destinataires. Les itérations sont symbolisées par une étape d'initialisation $INIT_3$ et une étape $IT_3$ d'incrémentation de l'indice j des antennes destinataires $A2_j$.

Une itération des étapes E1' à E4' correspondant à une antenne destinataire $A2_j$ comprend ainsi :

- lors de l'étape E1', l'émission via l'antenne destinataire $A2_j$ d'une première séquence pilote $seq\_pilot_1(t)$,
- lors de l'étape E2', la réception par le récepteur sélectif SEL1 de la première séquence pilote émise par l'antenne destinataire $A2_j$, et la sélection de l'antenne de référence $A1_{ref}$,

- lors de l'étape E3', l'estimation de la première réponse impulsionnelle $h1_{ref \leftarrow j}(t)$ du premier canal de propagation $C1(ref \leftarrow j)$ entre l'antenne destinataire $A2_j$ et l'antenne de référence $A1_{ref}$,
- lors de l'étape E4', la mémorisation dans la mémoire $MEM1_1$ de la première réponse impulsionnelle estimée $h1_{ref \leftarrow j}(t)$ ou de la fonction de transfert correspondante,

Les étapes E1' à E4' étant réitérées pour au moins une partie de l'ensemble des antennes destinataires, la mémoire $MEM1_1$ de l'entité communicante d'origine comporte alors l'ensemble des fonctions de transfert obtenues successivement lors des itérations.

Parallèlement aux itérations des étapes E1' à E4', le générateur de séquence PILOT1 de l'entité communicante d'origine génère, lors de l'étape E5', une deuxième séquence pilote $seq\_pilot_2(t)$. Cette deuxième séquence pilote est émise itérativement via chaque antenne d'une partie de l'ensemble des antennes d'origine. Les itérations sont symbolisées par une étape d'initialisation $INIT_4$ et une étape $IT_4$ d'incrémentation de l'indice i des antennes d'origine $A1_i$.

Pour une itération correspondant à l'émission de la deuxième séquence pilote $seq\_pilot_2(t)$ via l'antenne d'origine $A1_i$, les étapes E6' à E10' sont réitérées pour une partie des antennes destinataires.

L'itération des étapes E6' à E10' est symbolisée par une étape d'initialisation $INIT_5$ et une étape $IT_5$ d'incrémentation d'indice j des antennes destinataires $A2_j$.

Une itération des étapes E6' à E10' pour une antenne destinataire $A2_j$ comprend ainsi:

- lors de l'étape E6', l'estimateur de canal ESTIM1_2 de l'entité communicante destinataire, à partir de la deuxième séquence pilote émise via l'antenne d'origine $A1_i$ et reçue sur l'antenne $A2_j$, estime une deuxième réponse impulsionnelle $h2_{i \rightarrow j}(t)$. La réponse impulsionnelle $h2_{i \rightarrow j}(t)$, est représentative du deuxième canal de propagation $C2(i \rightarrow j)$ entre l'antenne d'origine $A1_i$ et l'antenne destinataire $A2_j$,
- lors de l'étape E7', le générateur de séquence pilote PILOT2_2 de l'entité destinataire génère une troisième séquence pilote $seq\_pilot_3(t)$. Cette troisième séquence pilote est émise par l'antenne destinataire $A2_j$ après pré-distorsion par la réponse impulsionnelle $h2_{i \rightarrow j}(t)$ déterminée lors de l'étape E6',
- lors de l'étape E8', le récepteur REC1 de l'entité communicante d'origine EC1 reçoit, sur l'ensemble des antennes d'origine, la troisième séquence pilote modulée émise par l'antenne destinataire $A2_j$. Le récepteur REC1 sélectionne le signal pilote reçu par l'antenne de référence $A1_{ref}$,
- lors de l'étape E9', l'estimateur de canal ESTIM1_2 de l'entité communicante d'origine, à partir du signal pilote reçu par l'antenne de référence, estime une réponse impulsionnelle $ri_{comb}(t)$, dite réponse impulsionnelle combinée, ou de façon équivalente une fonction de transfert $RI_{comb}(f)$ donnée par:

$$RI_{comb}(f) = H2_{i \rightarrow j}(f) \times H1_{ref \leftarrow j}(f)$$

- lors de l'étape E10', l'analyseur d'impulsion RTEMP1 effectue le retournement temporel de la réponse impulsionnelle combinée.

Pour une itération des étapes E6' à E10' effectuée pour l'antenne destinataire $A2_j$, la réponse impulsionnelle combinée retournée temporellement est alors mémorisée dans la mémoire $MEM1_2$ de l'entité communicante d'origine.

Les étapes E6' à E10' étant réitérées pour au moins une partie de l'ensemble des antennes d'origine, la mémoire $MEM1_2$ comporte, pour l'antenne destinataire $A2_j$ l'ensemble des réponses impulsionnelles combinées obtenues successivement lors des itérations sur l'indice i.

Après les itérations sur une partie de l'ensemble des antennes destinataires, la mémoire $MEM1_2$ de l'entité communicante d'origine comporte alors l'ensemble des fonctions de transfert $[H2_{(i \rightarrow j)}(f)]^* \times [H1_{ref \leftarrow j}(f)]^*$.

La succession des étapes E1' à E4' et la succession des étapes E5' à E10' peuvent être effectuées parallèlement. Cependant, une première itération de l'étape E8' pour une antenne $A1_i$ ne peut être mise en oeuvre qu'après la sélection d'une antenne de référence effectuée lors de la première itération de l'étape E2'. Ainsi, ce mode de réalisation permet d'optimiser le nombre d'échanges entre les entités communicantes en ajoutant cependant des contraintes de synchronisation des étapes entre les deux entités communicantes.

Lors de l'étape E11', le calculateur COMB1 de l'entité communicante d'origine effectue des combinaisons des premières réponses impulsionnelles mémorisées dans la mémoire $MEM1_1$ et des réponses impulsionnelles combinées retournées temporellement mémorisées dans la mémoire $MEM1_2$.

Pour un indice i d'antenne d'origine, i compris entre 1 et M1, et un indice j d'antenne destinataire, j compris entre 1 et M2, le calculateur COMB1 détermine ainsi la fonction de transfert $H_{ij}(f)$, dite fonction de transfert composite, donnée par:

$$H_{ij}(f)=H1_{\,ref_{\leftarrow}\,j}\,(f)\; x\;\; [H2_{i_{\rightarrow}j}(f)]^* \; x \; [H1_{ref_{\leftarrow}j}\,(f)]^*.$$

Pour des itérations effectuées sur l'ensemble des antennes d'origine et l'ensemble des antennes destinataires, le calculateur COMB1 de l'entité communicante d'origine effectue M1xM2 combinaisons des première réponses impulsionnelles mémorisées dans la mémoire $MEM1_1$ et des réponses impulsionnelles combinées retournées temporellement mémorisées dans la mémoire $MEM1_2$.

A l'étape E12', le pré-égaliseur PEGA1 de l'entité communicante d'origine détermine des coefficients de pré-égalisation d'un signal de données S(t) comportant M1 signaux d'antenne $[S_1(t), ..,S_i(t), ..,S_{M1}(t)]$, à partir d'une combinaison des fonctions de transfert composites $H_{ij}(f)$ pour former un ensemble FI de M1 filtres de pré-égalisation $FI_i(f)$, i variant de 1 à M1, pour des boucles d'itération effectuées pour toutes les antennes destinataires. Le signal d'antenne $S_i(t)$, émis via l'antenne $A1_i$ est ainsi mis en forme par application du filtre correspondant $FI_i(f)$ donné par:

$$FI_i(f) = \sum_{j=1}^{M2} C_j H_{ij}(f).$$

Le signal de données est ainsi pré-égalisé par filtrage de chacun des signaux d'antenne par le filtre correspondant de l'ensemble FI et émis par l'entité communicante EC1 à destination de l'entité communicante EC2.

Dans un mode particulier de réalisation, l'étape E1' et la boucle itérative sur les étapes E6'à E10' ne sont effectuées que pour une unique antenne d'origine $A1_i$ de l'ensemble des antennes d'origine. Ce mode de réalisation correspond au cas où le signal de données à égaliser est le signal d'antenne $S_i(t)$. La mémoire $MEM1_2$ de l'entité communicante d'origine comporte M2 fonctions de transfert composite $H_{ij}(f)$ pour j variant de 1 à M2. Le pré-égaliseur PEGA1 détermine un unique filtre de pré-égalisation $FI_i(f)$. Le signal d'antenne $S_i(t)$, émis via l'antenne $A1_i$ est ainsi mis en forme par application du filtre correspondant $FI_i(f)$ donné par :

$$FI_i(f) = \sum_{j=1}^{M2} C_j H_{ij}(f).$$

Le procédé peut également être mise en oeuvre pour une transmission bidirectionnelle. Dans ce mode particulier de réalisation, le procédé est mis en oeuvre dans le sens montant et le sens descendant selon le premier ou deuxième mode de réalisation correspondant aux figures 2 ou 3 de telle sorte que l'émission d'une séquence pilote et d'un signal d'antenne par une entité communicante ne soient pas effectuées simultanément afin d'assurer les estimations des canaux de propagation.

Dans les différents modes de réalisations présentés correspondants aux figure 2 ou 3, les boucles d'itérations sont effectuées sur une partie des antennes destinataires et une partie des antennes d'origine. Le nombre d'antennes et le choix des antennes sont des paramètres configurables du procédé. Ils sont déterminés par exemple en fonction de caractéristiques des antennes.

D'autre part, les première et/ou deuxième et/ou troisième séquences pilotes peuvent être choisies identiques.

L'invention décrite ici concerne un dispositif pour la pré-égalisation d'un signal de données mise en oeuvre dans une entité communicante d'origine. En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter celles des étapes du procédé selon l'invention mises en oeuvre dans l'entité communicante d'origine.

L'invention décrite ici concerne également un dispositif pour la pré-égalisation d'un signal de données mise en oeuvre dans une entité communicante destinataire. En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter celles des étapes du procédé selon l'invention mises en oeuvre dans l'entité communicante destinataire.

**Revendications**

1. Procédé de pré-égalisation d'un signal de données transmis en duplexage en fréquence, FDD, par une entité communicante d'origine (EC1) comportant un ensemble d'antennes d'origine (A1$_1$,...A1$_{M1}$), à destination d'une entité communicante destinataire (EC2) comportant un ensemble d'antennes destinataires (A2$_1$,...A2$_{M2}$), **caractérisé en ce qu'**il comporte des étapes de :

   • réception par une antenne de référence (A1$_{ref}$) de l'ensemble des antennes d'origine d'une première séquence pilote émise par une antenne destinataire (A2$_j$) au travers d'un premier canal de propagation sur une fréquence porteuse, f2, de la bande de fréquence dédiée aux transmissions de l'entité communicante destinataire (EC2) à destination de l'entité communicante d'origine (EC1), et d'estimation d'une première réponse impulsionnelle représentative dudit premier canal de propagation,
   • réception par l'antenne destinataire d'une deuxième séquence pilote émise par une antenne d'origine (A1$_i$) au travers d'un deuxième canal de propagation entre ladite antenne d'origine et l'antenne destinataire sur une fréquence porteuse, f1, de la bande de fréquence dédiée aux transmissions de l'entité communicante d'origine (EC1) à destination de l'entité communicante destinataire (EC2), et d'estimation d'une deuxième réponse impulsionnelle représentative dudit deuxième canal de propagation,
   • réception par l'antenne de référence d'une troisième séquence pilote, modulée par ladite deuxième réponse impulsionnelle, émise par l'antenne destinataire sur une fréquence porteuse, f2, de la bande de fréquence dédiée aux transmissions de l'entité communicante destinataire (EC2) à destination de l'entité communicante d'origine (EC1), et d'estimation d'une réponse impulsionnelle combinée représentative de la succession des dits deuxième et premier canaux de propagation,
   • retournement temporel par l'entité communicante d'origine (EC1) de la réponse impulsionnelle combinée,
   • combinaison par l'entité communicante d'origine (EC1) de la réponse impulsionnelle combinée retournée temporellement et de la première réponse impulsionnelle,

   lesdites étapes étant réitérées pour au moins une partie de l'ensemble des antennes destinataires et au moins une partie de l'ensemble des antennes d'origine, et

   • détermination de coefficients de pré-égalisation du signal de données à partir d'un ensemble desdites combinaisons de réponses impulsionnelles.

2. Procédé selon la revendication 1, dans lequel l'étape de réception de la première séquence pilote émise par l'antenne destinataire comporte une sélection de l'antenne de référence en fonction d'un ensemble de signaux pilotes reçus par l'ensemble d'antennes d'origine.

3. Procédé selon la revendication 2, dans lequel la sélection de l'antenne de référence est réalisée en fonction de l'énergie des signaux pilotes de l'ensemble des signaux pilotes reçus par l'ensemble des antennes d'origine.

4. Dispositif pour la pré-égalisation d'un signal de données transmis en duplexage en fréquence, FDD, pour une entité communicante (EC1), dite entité communicante d'origine, comportant un ensemble d'antennes d'origine (A1$_1$,...A1$_{M1}$), ladite entité communicante d'origine étant apte à transmettre ledit signal à destination d'une entité communicante destinataire (EC2) comportant un ensemble d'antennes destinataires (A2$_1$,...A2$_{M2}$), ledit dispositif étant **caractérisé en ce qu'**il comporte des moyens de :

   • réception (SEL1) par une antenne de référence (A1$_{ref}$) de l'ensemble des antennes d'origine d'une première séquence pilote émise par une antenne destinataire (A2$_j$) au travers d'un premier canal de propagation sur une fréquence porteuse, f2, de la bande de fréquence dédiée aux transmissions de l'entité communicante destinataire (EC2) à destination de l'entité communicante d'origine (EC1), et d'estimation (ESTIM1_1) d'une première réponse impulsionnelle représentative dudit premier canal de propagation,
   • émission (PILOT1) par une antenne d'origine (A1$_i$) d'une deuxième séquence pilote au travers d'un deuxième canal de propagation entre ladite antenne d'origine et l'antenne destinataire sur une fréquence porteuse, f1, de la bande de fréquence dédiée aux transmissions de l'entité communicante d'origine (EC1) à destination de l'entité communicante destinataire (EC2),
   • réception (REC1) par l'antenne de référence sur une fréquence porteuse, f2, de la bande de fréquence dédiée aux transmissions de l'entité communicante destinataire (EC2) à destination de l'entité communicante d'origine (EC1) d'une troisième séquence pilote modulée, et d'estimation (ESTIM1_2) d'une réponse impulsionnelle combinée représentative d'une succession des dits deuxième et premier canaux de propagation,

- retournement temporel (RTEMP1) de la réponse impulsionnelle combinée,
- combinaison (COMB1) de la réponse impulsionnelle combinée et retournée temporellement et de la première réponse impulsionnelle,
- détermination (PEGA1) de coefficients de pré-égalisation du signal de données à partir d'un ensemble de combinaisons de réponses impulsionnelles,

les moyens de réception, retournement temporel et de combinaison étant mis en oeuvre itérativement pour au moins une partie de l'ensemble des antennes destinataires et au moins une partie de l'ensemble des antennes d'origine.

**5.** Dispositif pour la pré-égalisation d'un signal de données transmis en duplexage en fréquence, FDD, pour une entité communicante (EC2), dite entité communicante destinataire, comportant un ensemble d'antennes destinataires ($A2_1,...A2_{M2}$), ladite entité communicante destinataire étant apte à recevoir ledit signal de données transmis par une entité communicante origine (EC1) comportant un dispositif selon la revendication 4, ladite entité communicante d'origine comportant un ensemble d'antenne d'origine ($A1_1,...A1_{M1}$),
ledit dispositif étant **caractérisé en ce qu'**il comporte des moyens de :

- émission (PILOT2_1) d'une première séquence pilote par une antenne destinataire ($A2_j$) à destination de l'entité communicante d'origine sur une fréquence porteuse, f2, de la bande de fréquence dédiée aux transmissions de l'entité communicante destinataire (EC2) à destination de l'entité communicante d'origine (EC1),
- réception (ESTIM2) d'une deuxième séquence pilote émise par une antenne d'origine sur une fréquence porteuse, f1, de la bande de fréquence dédiée aux transmissions de l'entité communicante d'origine (EC1) à destination de l'entité communicante destinataire (EC2), et d'estimation d'une réponse impulsionnelle,
- émission (PILOT2_2) sur une fréquence porteuse, f2, de la bande de fréquence dédiée aux transmissions de l'entité communicante destinataire (EC2) à destination de l'entité communicante d'origine (EC1) d'une troisième séquence pilote modulée par ladite réponse impulsionnelle estimée,

les moyens d'émission et de réception de l'entité communicante d'origine (EC1) et de l'entité communicante destinataire (EC2) étant mis en oeuvre itérativement pour au moins une partie de l'ensemble des antennes destinataires et au moins une partie de l'ensemble des antennes d'origine.

**6.** Entité communicante d'un système de communication radio comportant au moins un dispositif selon la revendication 4.

**7.** Entité communicante d'un système de communication radio comportant au moins un dispositif selon la revendication 5.

**8.** Système de communication radio comprenant au moins une entité communicante selon la revendication 6 et au moins une entité communicante selon la revendication 7.

**9.** Programme d'ordinateur pour une entité communicante, dite entité communicante d'origine, comprenant les instructions logicielles pour commander la mise en oeuvre par ladite entité de celles des étapes du procédé selon l'une quelconque des revendications 1 à 3 qui sont mises en oeuvre par l'entité communicante d'origine lorsque le programme est exécuté par l'entité communicante d'origine.

**10.** Programme d'ordinateur pour une entité communicante, dite entité communicante destinataire, comprenant les instructions logicielles pour commander la mise en oeuvre par ladite entité de celles des étapes du procédé selon l'une quelconque des revendications 1 à 3 qui sont mises en oeuvre par l'entité communicante destinataire lorsque le programme est exécuté par l'entité communicante destinataire.

**Patentansprüche**

**1.** Verfahren zur Vorentzerrung eines Datensignals, das in FDD Frequenzduplex von einer Ursprungskommunikationseinheit (EC1), die eine Einheit von Ursprungsantennen ($A1_1, ... A1_{M1}$) aufweist, zu einer Zielkommunikationseinheit (EC2), die eine Einheit von Zielantennen ($A2_1, ... A2_{M2}$) aufweist, übertragen wird, **dadurch gekennzeichnet, dass** es die folgenden Schritte aufweist:

- Empfangen von einer Bezugsantenne ($A1_{ref}$) von der Einheit der Ursprungsantennen einer ersten Pilotsequenz, die von einer Zielantenne (A2$_j$) über einen ersten Ausbreitungskanal auf einer Trägerfrequenz f2 des Frequenzbereichs, der den Übertragungen der Zielkommunikationseinheit (EC2) an die Ursprungskommunikationseinheit (EC1) gewidmet ist, gesendet wird, und Schätzen einer ersten Impulsantwort, die für den ersten Ausbreitungskanal repräsentativ ist,

• Empfangen von der Zielantenne einer zweiten Pilotsequenz, die von einer Ursprungsantenne (A1$_i$) über einen zweiten Ausbreitungskanal zwischen der Ursprungsantenne und der Zielantenne auf einer Trägerfrequenz f1 des Frequenzbereichs, der den Übertragungen der Ursprungskommunikationseinheit (EC1) an die Zielkommunikationseinheit (EC2) gewidmet ist, gesendet wird, und Schätzen einer zweiten Impulsantwort, die für den zweiten Ausbreitungskanal repräsentativ ist,

• Empfangen von der Bezugsantenne einer dritten Pilotsequenz, die durch die zweite Impulsantwort moduliert ist, die von der Zielantenne auf einer Trägerfrequenz f2 des Frequenzbereichs, der den Übertragungen der Zielkommunikationseinheit (EC2) an die Ursprungskommunikationseinheit (EC1) gewidmet ist, gesendet wird, und Schätzen einer kombinierten Impulsantwort, die für die Abfolge des ersten und des zweiten Ausbreitungskanals repräsentativ ist,

• Zeitumkehr durch die Ursprungskommunikationseinheit (EC1) der kombinierten Impulsantwort,

• Kombinieren durch die Ursprungskommunikationseinheit (EC1) der kombinierten zeitumgekehrten Impulsantwort und der ersten Impulsantwort,

wobei die Schritte für mindestens einen Teil der Einheit der Zielantennen und mindestens einen Teil der Einheit der Ursprungsantennen wiederholt werden, und

• Bestimmen von Vorentzerrungs-Koeffizienten des Datensignals ausgehend von einer Einheit der Kombinationen der Impulsantworten.

2. Verfahren nach Anspruch 1, wobei der Schritt des Empfangens der ersten Pilotsequenz, die von der Zielantenne gesendet wird, ein Auswählen der Bezugsantenne in Abhängigkeit von einer Einheit von Pilotsignalen, die von der Einheit der Ursprungsantennen empfangen werden, aufweist.

3. Verfahren nach Anspruch 2, wobei das Auswählen der Bezugsantenne in Abhängigkeit von der Energie der Pilotsignale der Einheit der Pilotsignale, die von der Einheit der Ursprungsantennen empfangen werden, erfolgt.

4. Vorrichtung zur Vorentzerrung eines Datensignals, das in FDD Frequenzduplex übertragen wird, für eine Kommunikationseinheit (EC1), Ursprungskommunikationseinheit genannt, die eine Einheit von Ursprungsantennen (A1$_1$, ... A1$_{M1}$) aufweist, wobei die Ursprungskommunikationseinheit geeignet ist, um das Signal zu einer Zielkommunikationseinheit (EC2), die eine Einheit von Zielantennen (A2$_1$, ... A2$_{M2}$) aufweist, zu übertragen, wobei die Vorrichtung **dadurch gekennzeichnet ist, dass** sie Mittel für Folgendes aufweist:

• Empfangen (SEL1) von einer Bezugsantenne (A1$_{ref}$) von der Einheit der Ursprungsantennen einer ersten Pilotsequenz, die von einer Zielantenne (A2$_j$) über einen ersten Ausbreitungskanal auf einer Trägerfrequenz f2 des Frequenzbereichs, der den Übertragungen der Zielkommunikationseinheit (EC2) an die Ursprungskommunikationseinheit (EC1) gewidmet ist, gesendet wird, und Schätzen (ESTIM1_1) einer ersten Impulsantwort, die für den ersten Ausbreitungskanal repräsentativ ist,

• Senden (PILOT1) von einer Ursprungsantenne (A1$_i$) einer zweiten Pilotsequenz über einen zweiten Ausbreitungskanal zwischen der Ursprungsantenne und der Zielantenne auf einer Trägerfrequenz f1 des Frequenzbereichs, der den Übertragungen der Ursprungskommunikationseinheit (EC1) an die Zielkommunikationseinheit (EC2) gewidmet ist,

• Empfangen (REC1) von der Bezugsantenne auf einer Trägerfrequenz f2 des Frequenzbereichs, der den Übertragungen der Zielkommunikationseinheit (EC2) an die Ursprungskommunikationseinheit (EC1) gewidmet ist, einer dritten modulierten Pilotsequenz und Schätzen (ESTIM1_2) einer kombinierten Impulsantwort, die für eine Abfolge des zweiten und des ersten Ausbreitungskanals repräsentativ ist,

• Zeitumkehr (RTEMP1) der kombinierten Impulsantwort,

• Kombinieren (COMB1) der kombinierten und zeitumgekehrten Impulsantwort und der ersten Impulsantwort,

• Bestimmen (PEGA1) von Vorentzerrungs-Koeffizienten des Datensignals ausgehend von einer Einheit von Kombinationen der Impulsantworten,

wobei die Mittel zum Empfangen, Zeitumkehren und zum Kombinieren iterativ für mindestens einen Teil der Einheit der Zielantennen und mindestens einen Teil der Einheit der Ursprungsantennen umgesetzt werden.

5. Vorrichtung zur Vorentzerrung eines Datensignals, das in FDD Frequenzduplex übertragen wird, für eine Kommunikationseinheit (EC2), Zielkommunikationseinheit genannt, die eine Einheit von Zielantennen (A2$_1$, ... A2$_{M2}$) aufweist, wobei die Zielkommunikationseinheit geeignet ist, das Datensignal zu empfangen, das von einer Ursprungskommunikationseinheit (EC1), die eine Vorrichtung nach Anspruch 4 aufweist, übertragen wird, wobei die Ursprungskommunikationseinheit eine Einheit von Ursprungsantennen (A1$_1$, ... A1$_{M1}$) aufweist, wobei die Vorrichtung **dadurch gekennzeichnet ist, dass** sie Mittel für Folgendes aufweist:

- Senden (PILOT2_1) einer ersten Pilotsequenz von einer Zielantenne (A2$_j$) an die Ursprungskommunikationseinheit auf einer Trägerfrequenz f2 des Frequenzbereichs, der den Übertragungen der Zielkommunikationseinheit (EC2) an die Ursprungskommunikationseinheit (EC1) gewidmet ist,
- Empfangen (ESTIM2) einer zweiten Pilotsequenz, die von einer Ursprungsantenne auf einer Trägerfrequenz f1 des Frequenzbereichs, der den Übertragungen der Ursprungskommunikationseinheit (EC1) an die Zielkommunikationseinheit (EC2) gewidmet ist, gesendet wird, und Schätzen einer Impulsantwort,
- Senden (PILOT2_2) auf einer Trägerfrequenz f2 des Frequenzbereichs, der den Übertragungen der Zielkommunikationseinheit (EC2) an die Ursprungskommunikationseinheit (EC1) gewidmet ist, einer dritten Pilotsequenz, die durch die geschätzte Impulsantwort moduliert wird,

wobei die Mittel zum Senden und zum Empfangen der Ursprungskommunikationseinheit (EC1) und der Zielkommunikationseinheit (EC2) iterativ für mindestens einen Teil der Einheit der Zielantennen und mindestens einen Teil der Einheit der Ursprungsantennen umgesetzt werden.

6. Kommunikationseinheit eines Funkkommunikationssystems, die mindestens eine Vorrichtung nach Anspruch 4 aufweist.

7. Kommunikationseinheit eines Funkkommunikationssystems, die mindestens eine Vorrichtung nach Anspruch 5 aufweist.

8. Funkkommunikationssystem, das mindestens eine Kommunikationseinheit nach Anspruch 6 und mindestens eine Kommunikationseinheit nach Anspruch 7 aufweist.

9. Computerprogramm für eine Kommunikationseinheit, Ursprungskommunikationseinheit genannt, das Softwareanweisungen zum Steuern der Umsetzung durch die Einheit derjenigen Schritte des Verfahrens nach einem der Ansprüche 1 bis 3, die von der Ursprungskommunikationseinheit umgesetzt werden, wenn das Programm von der Ursprungskommunikationseinheit ausgeführt wird, aufweist.

10. Computerprogramm für eine Kommunikationseinheit, Zielkommunikationseinheit genannt, das Softwareanweisungen zum Steuern der Umsetzung durch die Einheit derjenigen der Schritte des Verfahrens nach einem der Ansprüche 1 bis 3, die von der Zielkommunikationseinheit umgesetzt werden, wenn das Programm von der Zielkommunikationseinheit ausgeführt wird, aufweist.

**Claims**

1. Method for pre-equalizing a data signal transmitted using frequency-division duplexing, FDD, by a source communicating entity (EC1), having a set of source antennas (A1$_1$, ... A1$_{M1}$), to a destination communicating entity (EC2) having a set of destination antennas (A2$_1$, ... A2$_{M2}$), **characterized in that** it includes steps of:

- reception, by a reference antenna (A1$_{ref}$) of the set of source antennas, of a first pilot sequence transmitted by a destination antenna (A2$_j$) through a first propagation channel on a carrier frequency, f2, of the frequency band dedicated to the transmissions from the destination communicating entity (EC2) to the source communicating entity (EC1), and of estimating a first impulse response representative of said first propagation channel,
- reception, by the destination antenna, of a second pilot sequence transmitted by a source antenna (A1$_i$) through a second propagation channel between said source antenna and the destination antenna on a carrier frequency, f1, of the frequency band dedicated to the transmissions from the source communicating entity (EC1) to the destination communicating entity (EC2), and of estimating a second impulse response representative of said second propagation channel,
- reception, by the reference antenna, of a third pilot sequence, modulated by said second impulse response, transmitted by the destination antenna on a carrier frequency, f2, of the frequency band dedicated to the transmissions from the destination communicating entity (EC2) to the source communicating entity (EC1), and of estimating a combined impulse response representative of the succession of said second and first propagation channels,

• temporal reversal, by the source communicating entity (EC1), of the combined impulse response,

• combination, by the source communicating entity (EC1), of the temporally reversed combined impulse response and of the first impulse response,

said steps being reiterated for at least some of the set of destination antennas and at least some of the set of source antennas, and

• determination of pre-equalization coefficients for the data signal on the basis of a set of said combinations of impulse responses.

2. Method according to Claim 1, wherein the step of reception of the first pilot sequence transmitted by the destination antenna includes a selection of the reference antenna as a function of a set of pilot signals received by the set of source antennas.

3. Method according to Claim 2, wherein the selection of the reference antenna is implemented as a function of the energy in the pilot signals from the set of pilot signals received by the set of source antennas.

4. Device for pre-equalizing a data signal transmitted using frequency-division duplexing, FDD, for a communicating entity (EC1), termed source communicating entity, having a set of source antennas ($A1_1$, ... $A1_{M1}$), said source communicating entity being able to transmit said signal to a destination communicating entity (EC2) having a set of destination antennas ($A2_1$, ... $A2_{M2}$), said device being **characterized in that** it has means for:

• reception (SEL1), by a reference antenna ($A1_{ref}$) of the set of source antennas, of a first pilot sequence transmitted by a destination antenna ($A2_j$) through a first propagation channel on a carrier frequency, f2, of the frequency band dedicated to the transmissions from the destination communicating entity (EC2) to the source communicating entity (EC1), and for estimating (ESTIM1_1) a first impulse response representative of said first propagation channel,

• transmission (PILOT1), by a source antenna ($A1_i$), of a second pilot sequence through a second propagation channel between said source antenna and the destination antenna on a carrier frequency, f1, of the frequency band dedicated to the transmissions from the source communicating entity (EC1) to the destination communicating entity (EC2),

• reception (REC1), by the reference antenna, on a carrier frequency, f2, of the frequency band dedicated to the transmissions from the destination communicating entity (EC2) to the source communicating entity (EC1), of a modulated third pilot sequence, and for estimating (ESTIM1_2) a combined impulse response representative of a succession of said second and first propagation channels,

• temporal reversal (RTEMP1) of the combined impulse response,

• combination (COMB1) of the temporally reversed combined impulse response and of the first impulse response,

• determination (PEGA1) of pre-equalization coefficients for the data signal on the basis of a set of combinations of impulse responses, the reception, temporal reversal and combination means being implemented iteratively for at least some of the set of destination antennas and at least some of the set of source antennas.

5. Device for pre-equalizing a data signal transmitted using frequency-division duplexing, FDD, for a communicating entity (EC2), termed destination communicating entity, having a set of destination antennas ($A2_1$, ... $A2_{M2}$), said destination communicating entity being able to receive said data signal transmitted by a source communicating entity (EC1) having a device according to Claim 4, said source communicating entity having a set of source antennas ($A1_1$, ... $A1_{M1}$),

said device being **characterized in that** it has means for:

• transmission (PILOT2_1) of a first pilot sequence by a destination antenna ($A2_j$) to the source communicating entity on a carrier frequency, f2, of the frequency band dedicated to the transmissions from the destination communicating entity (EC2) to the source communicating entity (EC1),

• reception (ESTIM2) of a second pilot sequence transmitted by a source antenna on a carrier frequency, f1, of the frequency band dedicated to the transmissions from the source communicating entity (EC1) to the destination communicating entity (EC2), and for estimating an impulse response,

• transmission (PILOT2_2), on a carrier frequency, f2, of the frequency band dedicated to the transmissions from the destination communicating entity (EC2) to the source communicating entity (EC1), of a third pilot sequence modulated by said estimated impulse response,

the transmission and reception means of the source communicating entity (EC1) and of the destination communicating entity (EC2) being implemented iteratively for at least some of the set of destination antennas and at least some of the set of source antennas.

6. Communicating entity in a radio communication system having at least one device according to Claim 4.

7. Communicating entity in a radio communication system having at least one device according to Claim 5.

8. Radio communication system comprising at least one communicating entity according to Claim 6 and at least one communicating entity according to Claim 7.

9. Computer program for a communicating entity, called source communicating entity, comprising the software instructions for controlling the implementation, by said entity, of those of the steps of the method according to any one of Claims 1 to 3 that are implemented by the source communicating entity when the program is executed by the source communicating entity.

10. Computer program for a communicating entity, called destination communicating entity, comprising the software instructions for controlling the implementation, by said entity, of those of the steps of the method according to any one of Claims 1 to 3 that are implemented by the destination communicating entity when the program is executed by the destination communicating entity.

Figure 1

Figure 2

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007099571 A1
- EP 0936781 A1

- US 2007206504 A1

**Littérature non-brevet citée dans la description**

- **DAVID GESBERT ; MANSOOR SHAFI ; DA-SHAN SHIU ; PETER J SMITH ; AYMON NAGUIB.** From Theory to practice: an overview of MIMO space-time coded wireless systems. *IEEE Journal on Selected Areas in Communication,* Avril 2003, vol. 21 (3
- Blind beamforming in frequency division duplex MISO systems based on time reversal mirrors. **DAHL T et al.** IEEE WORKSHOP ON SIGNAL PROCESSING ADVANCES IN WIRELESS COMMUNICATIONS. IEEE, 02 Juin 2005, 640-644

- Space block Coding: A simple transmitter diversity technique for wireless communications. *IEEE Journal areas communications,* vol. 16, 1456-1458
- **JOHN G. PROAKIS ; MASOUD SAHELI.** Digital Communications. Mc Graw-Hill, Novembre 2007